# DEMANDE DE BREVET EUROPEEN

(11) **EP 4 265 452 A1**
(43) Date de publication de la demande: **25.10.2023**
(21) Numéro de dépôt: 23168980.3
(22) Date de dépôt: 20.04.2023
(51) Int. Cl.: B60J 7/06

(54) **MÉCANISME CONFIGURÉ POUR ARTICULER UNE STRUCTURE DE RECOUVREMENT POUR VÉHICULE, ET UN TEL MÉCANISME**

(30) Priorité: 22.04.2022 FR 2203736
(71) Demandeur: Fruehauf, 89002 Auxerre (FR)
(72) Inventeur: LAFONT, Jean-François, 89560 Ouanne (FR)
(74) Mandataire: Santarelli

(57) **Abrégé**

L'invention concerne un mécanisme (1) configuré pour articuler une structure de recouvrement pour véhicule, comportant un arceau (2) supportant la structure de recouvrement, un corps de chariot (3) monté coulissant sur le véhicule, un dispositif d'articulation (4) assujetti mécaniquement sur le corps de chariot, et un compas (5) pliable et assujetti mécaniquement par une extrémité (6, 7) au dispositif d'articulation et supportant aussi la structure de recouvrement, l'arceau étant assujetti mécaniquement à la fois au corps de chariot et au dispositif d'articulation, avec le corps de chariot qui présente une première portion de coulissement sensiblement en forme de L (30) et une deuxième portion de montage sensiblement en forme de U inversé (31) qui s'étend en saillie de la première portion, et avec le dispositif d'articulation qui présente un corps central (15) prévu pour être reçu dans la deuxième portion de montage, pour la fixation de l'arceau, et des extensions latérales (16) ménagées en saillie de part et d'autre du corps central pour la fixation du compas.

## Description

### Domaine technique de l'invention

La présente invention concerne un mécanisme configuré pour articuler une structure de recouvrement pour véhicule.

La présente invention concerne en outre un véhicule, notamment du type remorque pour camion, comportant une structure de recouvrement de la remorque et un mécanisme configuré pour articuler la structure de recouvrement.

### Etat de la technique

Il existe des camions dont la remorque est surmontée d'une structure de recouvrement comportant une bâche au moins partiellement flexible et un mécanisme configuré pour articuler cette bâche. Il est question ici d'une bâche montée sur le dessus de la remorque, et non sur les côtés de la remorque, et qui peut présenter une configuration dépliée dans laquelle elle ferme totalement le dessus de la remorque, et une configuration repliée ou partiellement repliée dans laquelle elle autorise l'accès complètement ou partiellement à une ouverture d'accès formée sur le dessus de la remorque, par exemple pour son chargement et/ou son déchargement.

La demande de brevet EP 2 080 654 décrit une telle remorque surmontée d'une structure de recouvrement comportant une bâche et un mécanisme d'articulation de la structure de recouvrement.

En particulier, il y est décrit des rails, ou profilés, assujettis sur des longerons opposés de la remorque, une pluralités d'arceaux transversaux disposés chacun entre les rails, une pluralité de glissières montées chacune coulissantes sur les rails respectifs, chaque arceau étant assujetti par une extrémité à une glissière sur un rail et par une extrémité opposée à une glissière sur le rail opposé, et une pluralité de compas pliables, chacun étant assujetti par une extrémité à une glissière sur un rail et par une extrémité opposée à une glissière successive sur le même rail.

Le coulissement des glissières sur les rails entraîne le déplacement des arceaux le long des longerons et l'articulation des compas qui passent d'une configuration déployée sensiblement à plat à une configuration érigée sensiblement à la verticale, permettant ainsi aux glissières et donc aux arceaux de se rapprocher respectivement les uns des autres.

La bâche étant configurée pour être assujettie aux arceaux, elle est entraînée en déplacement avec ces derniers. Dans la configuration dépliée de la bâche, cette dernière repose sur les arceaux disposés transversalement et situés à distance les uns des autres et aussi sur les compas disposés longitudinalement à plat, tandis que dans la configuration repliée ou partiellement repliée de la bâche, cette dernière repose sur les arceaux disposés transversalement et à proximité les uns des autres et aussi sur les compas dans leur configuration érigée.

Dans la demande de brevet EP 2 080 654, les glissières sont réalisées en une seule pièce et sont pourvues d'une première portion montée sur un rail respectif et d'une deuxième portion, en saillie de la première portion, et sur laquelle sont assujettis à la fois un arceau et au moins un compas.

La demande de brevet FR 2 742 105 décrit une glissière d'un genre similaire à celle décrite ci-dessus, formée d'une seule pièce métallique.

On connaît également de la demande de brevet DE 10 2013 003 222 une glissière du même type que celles décrites ci-dessus, sauf qu'elle est formée de plusieurs pièces assemblées entre elles.

En particulier, la glissière décrite dans la demande de brevet DE 10 2013 003 222 comporte une première pièce en forme de C couché et configurée pour être assujettie sur un rail, une deuxième pièce en forme de goulotte fixée avec la première pièce et configurée pour être assujettie sur un arceau, une troisième pièce montée et fixée autour de la deuxième pièce et configurée pour être assujettie avec un plusieurs compas, et aussi une quatrième pièce logée et fixée dans la deuxième pièce en forme de goulotte, à proximité immédiate de la première pièce en forme de C, et pourvue d'une protubérance apte à venir se loger dans une cavité du rail et former ainsi une butée dite anti basculement.

### Exposé de l'invention

L'invention vise à fournir un mécanisme configuré pour articuler une structure de recouvrement pour véhicule qui soit particulièrement simple et commode tant à la fabrication qu'au montage.

L'invention a ainsi pour objet, sous un premier aspect, un mécanisme configuré pour articuler une structure de recouvrement pour véhicule, caractérisé en ce qu'il comporte au moins un arceau configuré pour supporter la structure de recouvrement du véhicule, au moins un corps de chariot configuré pour être monté coulissant sur le véhicule, au moins un dispositif d'articulation distinct du corps de chariot et configuré pour être assujetti mécaniquement à ce dernier, et au moins un compas pliable et configuré pour être assujetti mécaniquement par une extrémité au dispositif d'articulation et pour supporter aussi la structure de recouvrement du véhicule, caractérisé en ce que l'au moins un arceau est configuré en outre pour être assujetti mécaniquement à la fois au corps de chariot et au dispositif d'articulation, avec le corps de chariot qui présente une première portion de coulissement sensiblement en forme de L et une deuxième portion de montage sensiblement en forme de U inversé qui s'étend en saillie de la première portion en forme de L, et avec le dispositif d'articulation qui présente un corps central prévu pour être au moins partiellement reçu dans la deuxième portion de montage sensiblement en forme de U inversé du corps de chariot, pour la fixation de l'au moins un arceau, et des extensions latérales ménagées en saillie de part et d'autre du corps central pour la fixation de l'au moins un compas.

Le mécanisme selon l'invention est particulièrement commode en ce qu'il est possible de dissocier notamment le corps de chariot et le dispositif d'articulation tout en assurant une rigidité et une reprise d'effort suffisante, d'une part entre le véhicule et l'arceau via le corps de chariot et au moins le corps central du dispositif d'articulation, et d'autre part entre le compas et le véhicule via les extensions latérales du dispositif d'articulation et au moins la première portion de coulissement sensiblement en forme de L du corps de chariot, et tout en restant compact.

D'autres caractéristiques particulièrement simples et commodes du mécanisme d'articulation selon l'invention sont décrites ci-après.

L'au moins un corps de chariot présente une portion de jonction entre la première portion de coulissement sensiblement en forme de L et la deuxième portion de montage sensiblement en forme de U inversé, avec la portion de jonction qui est pourvue de zones latérales ménagées en renfoncement, et l'au moins un dispositif d'articulation qui est pourvu de dégagements latéraux dans les extensions latérales pour la réception des zones latérales ménagées en renfoncement de l'au moins un corps de chariot.

Les zones latérales ménagées en renfoncement de l'au moins un corps de chariot sont formées par des parois bombées du côté de la deuxième portion de montage sensiblement en forme de U inversé.

L'au moins un dispositif d'articulation est pourvu de dégagements longitudinaux ménagés entre le corps central et les extensions latérales, pour le passage de la deuxième portion de montage sensiblement en forme de U inversé du corps de chariot.

L'au moins un dispositif d'articulation est pourvu d'une protubérance ménagée en saillie dans une direction d'extension du corps central.

Le mécanisme comporte en outre au moins un axe de montage pour l'assujettissement de l'au moins un compas avec l'au moins un dispositif d'articulation, l'au moins un compas comportant au moins une patte de montage pourvue d'un trou traversant, et les extensions latérales de l'au moins un dispositif d'articulation présentant chacune deux parois transversales ménagées à distance l'une de l'autre de sorte à définir un espace d'accueil entre elles pour la réception de la patte de montage ménagée à l'extrémité de l'au moins un compas, et pourvues chacune d'un orifice traversant pour l'insertion de l'axe de montage au travers à la fois des orifices traversant des parois transversales des extensions latérales de l'au moins un dispositif d'articulation et de la patte de montage de l'au moins un compas.

L'au moins un compas présente une portion centrale élargie et des portions d'extrémités amincies s'étendant de part et d'autre de la portion centrale élargie, avec une zone de pli située dans la portion centrale élargie et s'étendant transversalement à une direction générale longitudinale d'extension de l'au moins un compas.

Des nervures de rigidification sont en outre ménagées longitudinalement depuis les portions d'extrémités amincies jusqu'à la portion centrale élargie de l'au moins un compas.

Le mécanisme comporte en outre au moins une pièce d'accrochage de câbles en forme d'oméga inversé et configurée pour être assujettie mécaniquement à la fois avec l'au moins un arceau, la deuxième portion de montage sensiblement en forme de U inversé de l'au moins un corps de chariot et le corps central de l'au moins un dispositif d'articulation.

L'au moins une pièce d'accrochage de câbles est pourvue de branches d'extrémités globalement plates et triangulaires et dans chacune desquelles est ménagé au moins un trou pour l'accrochage d'au moins un câble.

L'au moins un arceau et l'au moins un corps de chariot sont réalisés en métal, et l'au moins un dispositif d'articulation et l'au moins un compas sont réalisés en plastique.

L'invention a aussi pour objet, sous un deuxième aspect, un véhicule, notamment du type remorque pour camion, comportant une structure de recouvrement de la remorque et un mécanisme tel que décrit ci-dessus et qui est configuré pour articuler la structure de recouvrement.

Le véhicule peut comporter un support définissant une ouverture d'accès, au moins un rail de guidage assujetti mécaniquement et solidairement sur le support, avec le mécanisme qui est assujetti mécaniquement à coulissement sur l'au moins un rail de guidage pour passer la structure de recouvrement de l'une à l'autre d'une configuration dépliée dans laquelle elle ferme totalement ou quasiment totalement l'ouverture d'accès, et d'une configuration repliée ou partiellement repliée dans laquelle elle autorise l'accès complètement ou partiellement à l'ouverture d'accès.

L'au moins un rail de guidage est pourvu d'un profilé externe formant un premier logement de guidage pour la réception d'au moins un premier galet monté mobile en rotation dans la première portion de coulissement sensiblement en forme de L, du côté d'une petite branche du L, et d'un profilé supérieur formant un deuxième logement de guidage pour la réception d'au moins un deuxième galet monté mobile en rotation dans la première portion de coulissement sensiblement en forme de L, du côté d'une grande branche du L.

La structure de recouvrement est formée par une bâche, qui peut être par exemple renforcée.

### Brève description des figures

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
La figure 1 illustre en perspective un mécanisme configuré pour articuler une structure de recouvrement pour véhicule, selon l'invention.
La figure 2 représente partiellement en perspective éclatée le mécanisme de la figure 1.
La figure 3 illustre en perspective et de manière isolée un dispositif d'articulation du mécanisme visible sur les figures 1 et 2.
La figure 4 représente en vue de dessus le dispositif d'articulation de la figure 3.
La figure 5 est une vue de face du dispositif d'articulation des figures 3 et 4.
La figure 6 représente en vue de côté le dispositif d'articulation des figures 3 à 5.
La figure 7 est une vue en coupe représentée A-A sur la figure 4.
La figure 8 est une vue en coupe représentée B-B sur la figure 5.
La figure 9 illustre en perspective et de manière isolée un corps de chariot du mécanisme visible sur les figures 1 et 2.
La figure 10 représente en vue de côté le corps de chariot de la figure 9.
La figure 11 est une vue de dessus du corps de chariot visible sur les figures 9 et 10.
La figure 12 illustre en vue de dessous et de manière isolée un compas du mécanisme visible sur les figures 1 et 2.
La figure 13 est une vue de face du compas visible sur la figure 12.
La figure 14 représente en vue de dessus le compas visible sur les figures 12 et 13.
La figure 15 représente de manière isolée et en vue de face un axe de montage du compas visible sur les figures 12 à 14 sur le dispositif d'articulation visible sur les figures 3 à 8.
La figure 16 est une vue similaire à celle de la figure 15, montrant l'axe de montage tourné d'un quart de tour.
La figure 17 représente de manière isolée, en vue de face, une pièce d'accrochage de câbles du mécanisme visible sur les figures 1 et 2.
La figure 18 est similaire à celle de la figure 17, mais montrant la pièce d'accrochage en vue de dessus.
La figure 19 illustre l'assemblage du dispositif d'articulation avec le corps de chariot tels que visibles sur les figures 3 à 11.
La figure 20 est similaire à celle de la figure 19, mais prise selon un autre angle de vue.
La figure 21 montre l'assemblage du dispositif d'articulation ensemble avec le corps de chariot des figures 19 et 20, avec un rail du mécanisme visible sur les figures 1 et 2.
La figure 22 montre l'assemblage du dispositif d'articulation ensemble avec le corps de chariot des figures 19 et 20 et le compas visible sur les figures 12 à 14.
La figure 23 montre l'assemblage du dispositif d'articulation ensemble avec le corps de chariot et deux compas, avec un arceau du mécanisme visible sur les figures 1 et 2, avec la pièce d'accrochage visible sur les figures 17 et 18 montée sur cet arceau, et avec des pièces d'extrémité de câbles configurées pour être fixées sur la pièce d'accrochage.
La figure 24 est similaire à la figure 23, mais prise selon un autre angle de vue.

### Description détaillée

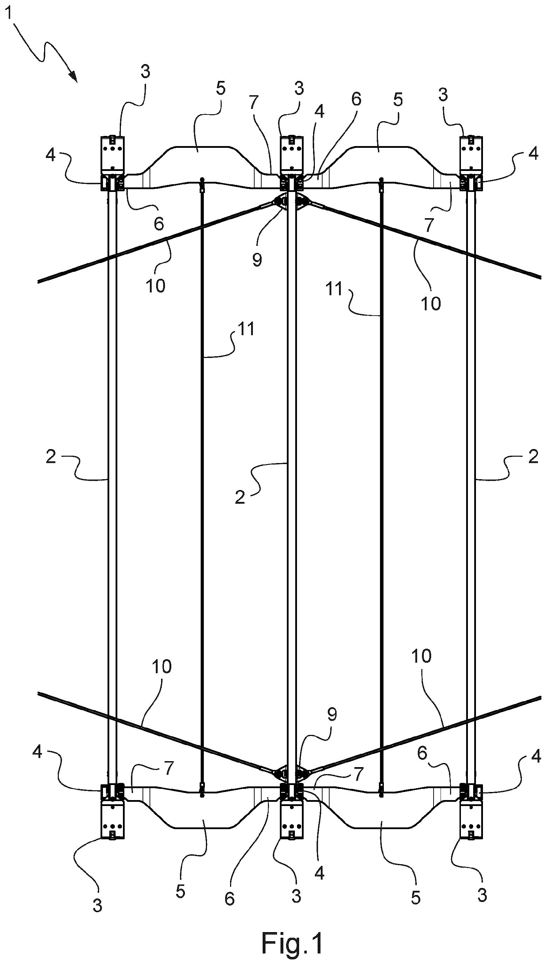

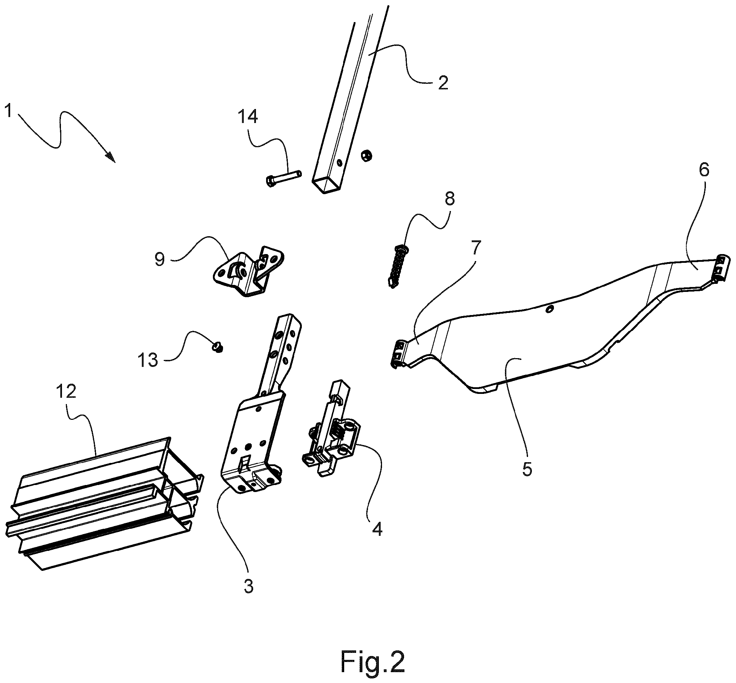

Les figures 1 et 2 montrent un mécanisme 1 configuré pour articuler une structure de recouvrement pour véhicule.

Il peut par exemple s'agir d'un véhicule du type remorque pour camion.

La structure de recouvrement de la remorque peut être formée par une bâche, qui peut être on non par exemple renforcée, notamment avec des éléments de renfort soudés et ou intégrés à la bâche.

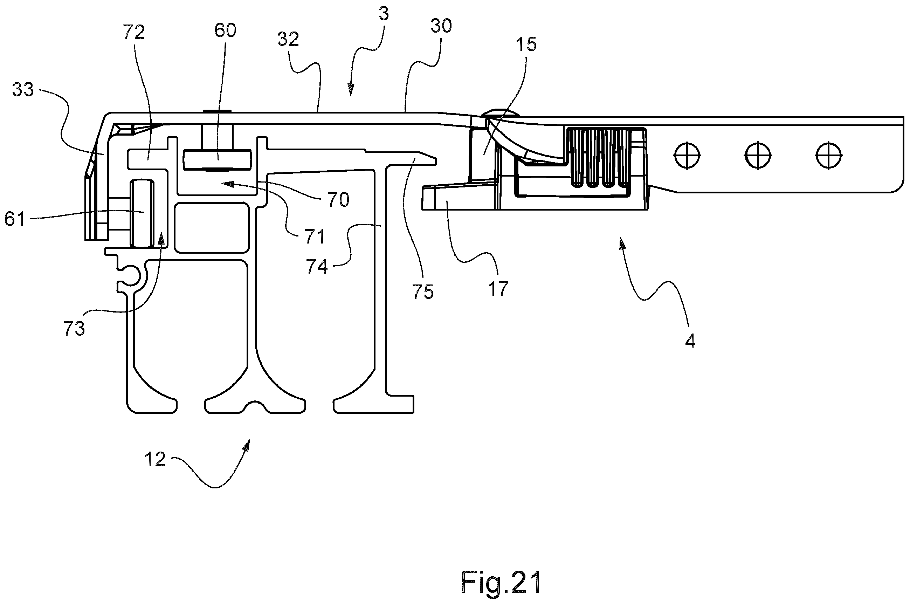

Une telle remorque est généralement pourvue d'une caisse formant un support définissant une ouverture d'accès, et de rails de guidage 12 (visibles figure 2 et ci-après en référence à la figure 21) qui sont assujettis mécaniquement et solidairement sur le support.

Le mécanisme 1 est configuré pour être assujetti mécaniquement à coulissement sur les rails de guidage 12 pour passer la structure de recouvrement de l'une à l'autre d'une configuration dépliée dans laquelle elle ferme totalement ou quasiment totalement l'ouverture d'accès, et d'une configuration repliée ou partiellement repliée dans laquelle elle autorise l'accès complètement ou partiellement à l'ouverture d'accès, par exemple pour le chargement et/ou le déchargement de la remorque.

En particulier, le mécanisme 1 comporte une pluralité d'arceaux 2 configurés pour supporter la structure de recouvrement.

Les arceaux 2 s'étendent globalement transversalement à une direction générale longitudinale de la remorque et de la structure de recouvrement.

Le mécanisme 1 comporte en outre une pluralité de corps de chariot 3 configurés pour être montés coulissant sur les rails de guidage 12, de part et d'autre du support de remorque.

Le mécanisme 1 comporte en outre une pluralité de dispositifs d'articulation 4 qui sont distincts des corps de chariot 3 et qui sont configurés pour être assujettis mécaniquement à ces derniers.

Le mécanisme comporte ici des premiers organes de montage 13 (figure 2), par exemple du type rivet, pour l'assujettissement des corps de chariot 3 avec les dispositifs d'articulation 4 respectifs.

Chaque arceau 2 est ici configuré en outre pour être assujetti mécaniquement à la fois à un corps de chariot 3 et à un dispositif d'articulation 4.

Le mécanisme comporte ici des deuxièmes organes de montage 14 (figure 2), par exemple du type boulon, pour l'assujettissement des arceaux 2 avec les corps de chariot 3 et les dispositifs d'articulation 4 respectifs.

Le mécanisme 1 comporte en outre une pluralité de compas 5 qui sont pliables et configurés pour être assujettis mécaniquement par une extrémité 6 à un dispositif d'articulation 4 et par une extrémité opposée 7 à un autre dispositif d'articulation 4.

Le mécanisme comporte en outre des axes de montage 8 (figure 2) pour l'assujettissement des compas 5 avec les dispositifs d'articulation 4 respectifs.

Les compas 5 sont prévus pour supporter aussi la structure de recouvrement.

La structure de recouvrement est configurée pour être assujettie aux arceaux 2, de sorte qu'elle est entraînée en déplacement avec ces derniers.

En particulier, le coulissement des corps de chariot 3 sur les rails de guidage 12 entraîne le déplacement des arceaux 2 le long du support de remorque ainsi que l'articulation des compas 5 qui passent d'une configuration déployée sensiblement à plat à une configuration érigée sensiblement à la verticale, permettant ainsi aux corps de chariot 3, aux dispositifs d'articulation 4 et aux arceaux 2 de se rapprocher respectivement les uns des autres.

Dans la configuration dépliée de la structure de recouvrement, cette dernière repose sur les arceaux 2 disposés transversalement et situés à distance les uns des autres et aussi sur les compas 5 disposés longitudinalement à plat, tandis que dans la configuration repliée ou partiellement repliée de la structure de recouvrement, cette dernière repose sur les arceaux 2 disposés à proximité les uns des autres et aussi sur les compas 5 dans leur configuration érigée.

Le mécanisme 1 comporte en outre des pièces d'accrochage 9 assujetties mécaniquement chacune à la fois avec un arceau 2, un corps de chariot 3 et un dispositif d'articulation 4, et configurées pour permettre l'accrochage de câbles de renfort 10 s'étendant sous la structure de recouvrement, ici en diagonale.

Autrement dit, dans l'exemple illustré, les câbles de renfort 10 s'étendent depuis une pièce d'accrochage 9 située d'un côté du support de remorque jusqu'à rejoindre, en diagonale, une autre pièce d'accrochage 9 située d'un côté opposé du support de remorque.

Le mécanisme 1 comporte en outre des câbles de tension 11 s'étendant transversalement entre des compas 5 situés de part et d'autre du support de remorque, auxquels ils sont assujettis. Les câbles de tension 11 s'étendent donc sensiblement parallèlement aux arceaux 2 d'un côté à l'autre du support de remorque.

Dans l'exemple illustré, les arceaux 2, les corps de chariot 3 et les pièces d'accrochage 9 sont réalisés en métal, tandis les dispositifs d'articulation 4 et les compas 5 sont réalisés en plastique.

Les câbles de renfort 10 sont généralement réalisés en métal, tandis que les câbles de tensions 11 peuvent être formés en une matière élastique et/ou métallique.

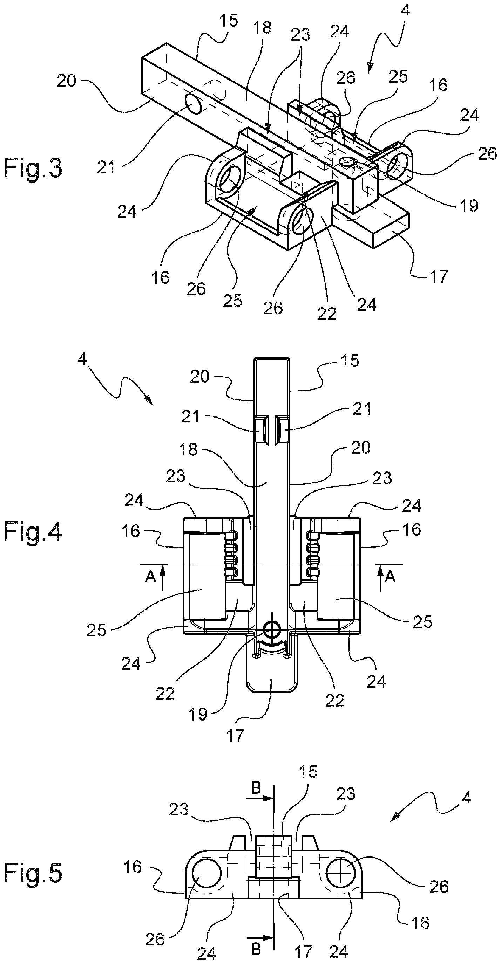

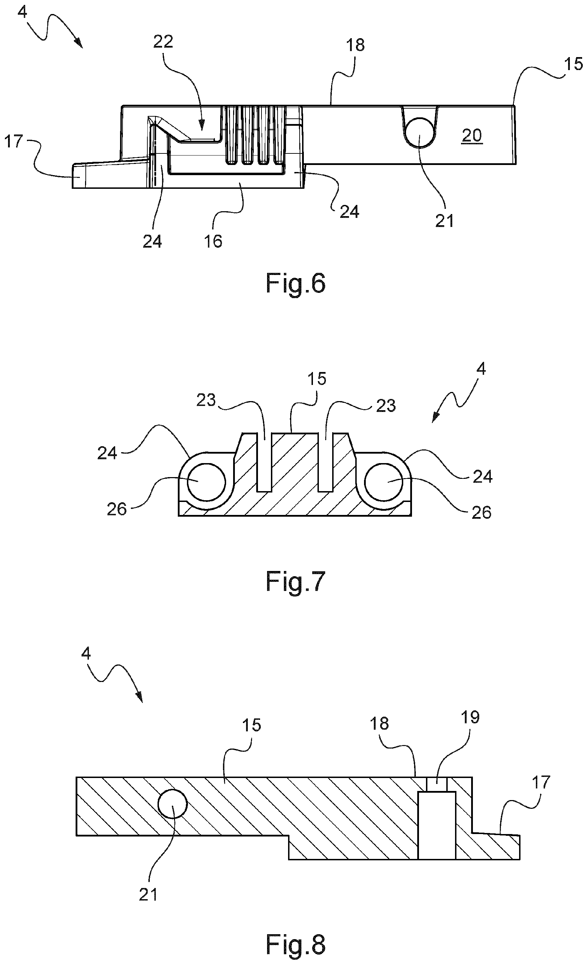

Les figures 3 à 8 montrent plus en détail le dispositif d'articulation 4 du mécanisme 1.

Le dispositif d'articulation 4 présente un corps central 15 s'étendant longitudinalement et prévu pour être disposé, comme visible sur la figure 1, selon une orientation transversale lorsqu'il est monté sur le support de remorque.

Le corps central 15 est ici de forme globalement parallélépipédique.

Le dispositif d'articulation 4 présente en outre des extensions latérales 16 ménagées en saillie de part et d'autre du corps central 15.

Le dispositif d'articulation 4 est ici pourvu d'une protubérance 17 ménagée en saillie dans la direction d'extension longitudinale du corps central 16, au-delà des extensions latérales 16.

Le corps central 15 est prévu pour l'assujettissement d'un corps de chariot 3 ensemble avec un arceau 2 et une pièce d'accrochage 9 respectifs, tandis que les extensions latérales 16 sont prévues pour la fixation d'un ou deux compas 5.

En particulier, le corps central 15 est ici pourvu, sur une face supérieure 18, d'un premier orifice de fixation 19 du corps de chariot 3 et, sur des faces latérales 20, d'un deuxième orifice de fixation 21 de l'arceau 2 et de la pièce d'accrochage 9.

Le dispositif d'articulation 4 est ici pourvu de dégagements latéraux 22 ménagés dans les extensions latérales 16 et de dégagements longitudinaux 23 ménagés entre le corps central 15 et les extensions latérales 16.

Les dégagements latéraux 22 et les dégagements longitudinaux 23 sont prévus pour l'assujettissement du corps de chariot 3.

Les extensions latérales 16 présentent chacune deux parois transversales 24 ménagées à distance l'une de l'autre de sorte à définir un espace d'accueil 25 entre elles, et qui sont pourvues chacune d'un orifice traversant 26.

L'espace d'accueil 25 et les orifices traversant 26 sont prévus pour l'assujettissement d'un compas 5 respectif par le biais d'un axe de montage 8.

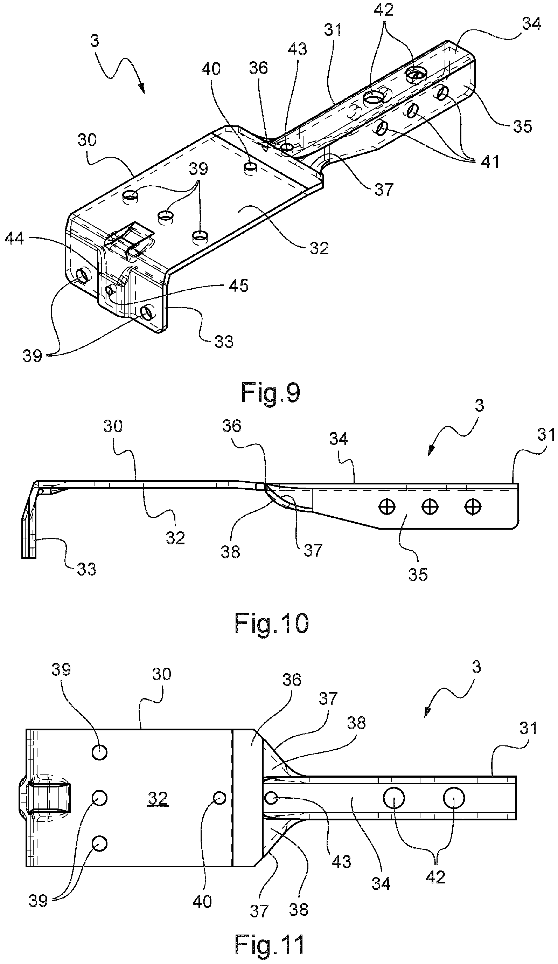

Les figures 9 à 11 montrent plus en détail le corps de chariot 3 du mécanisme 1.

Le corps de chariot 3 présente une première portion de coulissement sensiblement en forme de L 30 et une deuxième portion de montage sensiblement en forme de U inversé 31 qui s'étend en saillie de la première portion de coulissement en forme de L 30.

La première portion de coulissement sensiblement en forme de L 30 est pourvue ici d'une grande branche du L 32 qui s'étend globalement dans un premier plan horizontal et une petite branche du L 33 qui s'étend depuis la grande branche du L 32 dans un deuxième plan globalement perpendiculaire au premier plan horizontal.

La deuxième portion de montage sensiblement en forme de U inversé 31 est pourvue ici d'une branche supérieure 34 qui s'étend globalement dans un troisième plan horizontal et de deux branches latérales 35 s'étendant de part de la branche supérieure 34 dans un quatrième plan et un cinquième plan globalement parallèles entre eux et perpendiculaires au troisième plan horizontal.

En particulier ici, la petite branche du L 33 s'étend dans la direction générale longitudinale du support de remorque, tandis que les branches latérales 35 s'étendent dans la même direction générale longitudinale que l'arceau 2 et le dispositif d'articulation 4, correspondant à la direction transversale à celle du support de remorque.

Le corps de chariot 3 présente en outre une portion de jonction 36 entre la première portion de coulissement sensiblement en forme de L 30 et la deuxième portion de montage sensiblement en forme de U inversé 31.

La portion de jonction 36 est pourvue de zones latérales 37 ménagées en renfoncement.

Les zones latérales 37 ménagées en renfoncement sont ici formées par des parois bombées 38 du côté de la deuxième portion de montage sensiblement en forme de U inversé 31, et en particulier du côté des branches latérales 35.

Ainsi, le premier plan horizontal dans lequel s'étend la grande branche du L 32 est décalé du troisième plan horizontal dans lequel s'étend la branche supérieure 34, tandis que le deuxième plan dans lequel s'étend la petite branche du L 33 est sensiblement orthogonale aux quatrième et cinquièmes plans dans lesquels s'étendent les deux branches latérales 35.

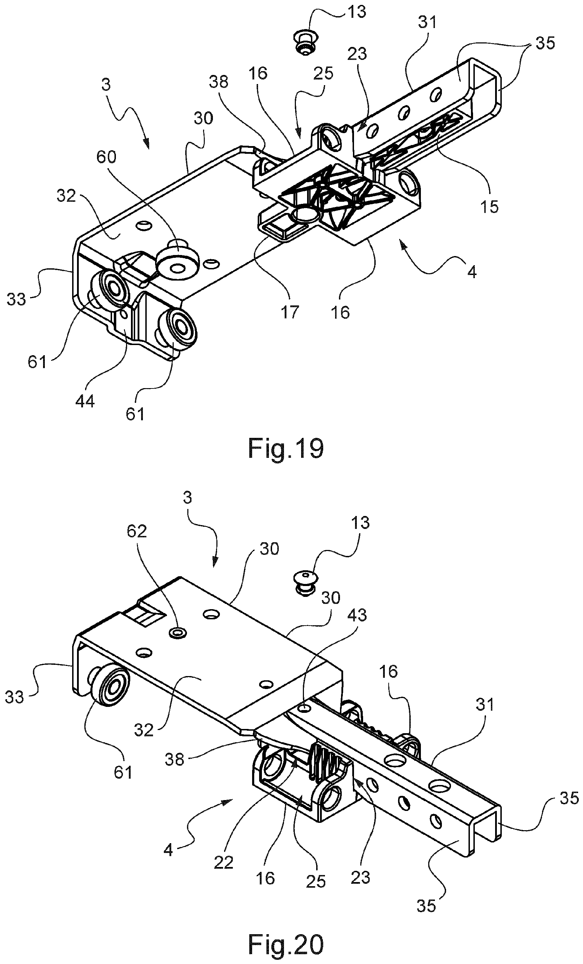

Le corps de chariot 3 présente ici en outre une pluralité de premiers trous de fixation 39 ménagés au travers de la grande branche du L 32 et de la petite branche du L 33 pour l'assujettissement mécanique de galets (visibles figures 19 à 21) pour le coulissement du corps de chariot 3.

Le corps de chariot 3 présente ici aussi un orifice 40, qui est prévu par exemple pour la fixation de la bâche.

Le corps de chariot 3 présente ici également une pluralité de deuxièmes trous de fixation 41 ménagés au travers des branches latérales 35, qui sont prévus pour l'assujettissement de l'arceau 2 et de la pièce d'accrochage 9, par le biais d'un deuxième organe de montage 14.

Le corps de chariot 3 présente en outre une pluralité de troisièmes trous de fixation 42 ménagés au travers de la branche supérieure 34, et qui sont configurés par exemple pour permettre un assujettissement de l'arceau 2, notamment par écrasement de ce dernier et pénétration de la matière dans ces trous.

Le corps de chariot 3 présente aussi au moins un quatrième trou de fixation 43 ménagé au travers de la branche supérieure 34, à proximité immédiate de la portion de jonction 36, qui est prévu pour l'assujettissement du corps de chariot 3, par le biais du premier organe de montage 13.

Le corps de chariot 3 présente ici une zone emboutie 44 ménagée sur la petite branche du L 33 et pourvue d'un orifice 45, qui est prévu aussi par exemple pour la fixation de la bâche.

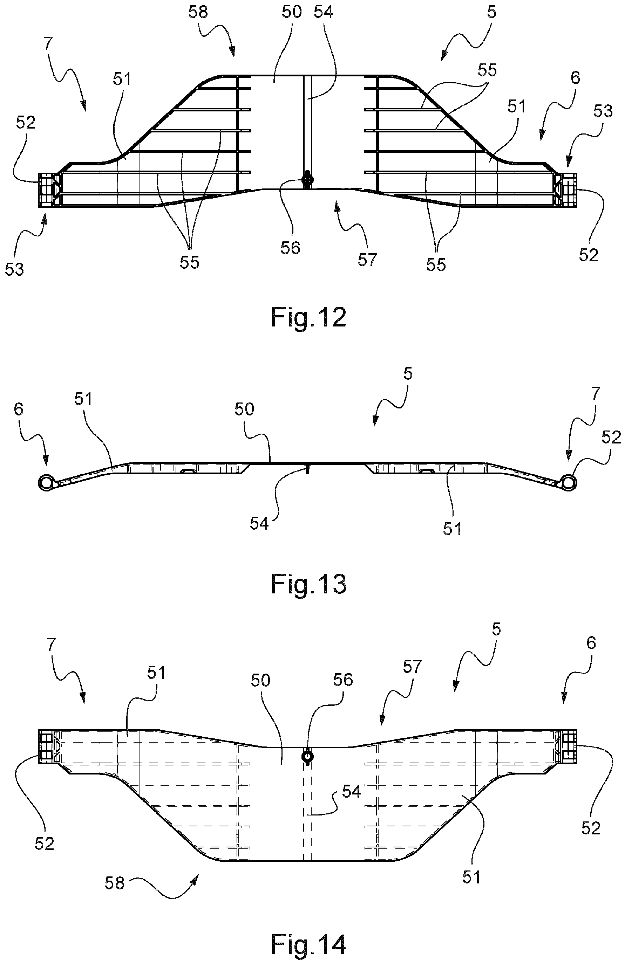

Les figures 12 à 14 montrent plus en détail le compas 5 du mécanisme 1.

Le compas 5 présente une portion centrale élargie 50 et des portions d'extrémités amincies 51 s'étendant de part et d'autre de la portion centrale élargie 50.

Le compas 5 comporte une patte de montage 52 aux extrémités 6 et 7 du compas, dans le prolongement des portions d'extrémités amincies 51.

Les pattes de montage 52 sont globalement cylindriques et sont pourvues chacune d'un trou traversant 53.

Le compas 5 présente une zone de pli 54 située dans la portion centrale élargie 50 et s'étendant transversalement à la direction générale longitudinale d'extension du compas 5.

Le compas 5 présente en outre des nervures de rigidification 55 qui sont ménagées longitudinalement depuis les portions d'extrémités amincies 51 jusqu'à la portion centrale élargie 50 du compas 5.

Le compas 5 présente en outre un orifice débouchant 56 ménagé ici à une extrémité de la zone de 54, d'un côté interne 57 du compas 5, opposée à un côté externe 58 du compas 5, et prévu pour y fixer un câble de tension 11 respectif.

Dans l'exemple illustré, le compas 5 a une forme globalement incurvée, bombée du côté externe 57 et légèrement en renfoncement du côté interne 57.

En outre, la portion centrale élargie 50 présente, au niveau au moins de la zone de pli 54, une épaisseur plus fine que sur le reste du compas 5, notamment du fait des nervures de rigidification 55.

Le compas 5 est configuré pour être articulé autour de la zone de pli 54, entre sa configuration déployée sensiblement à plat et sa configuration érigée sensiblement à la verticale.

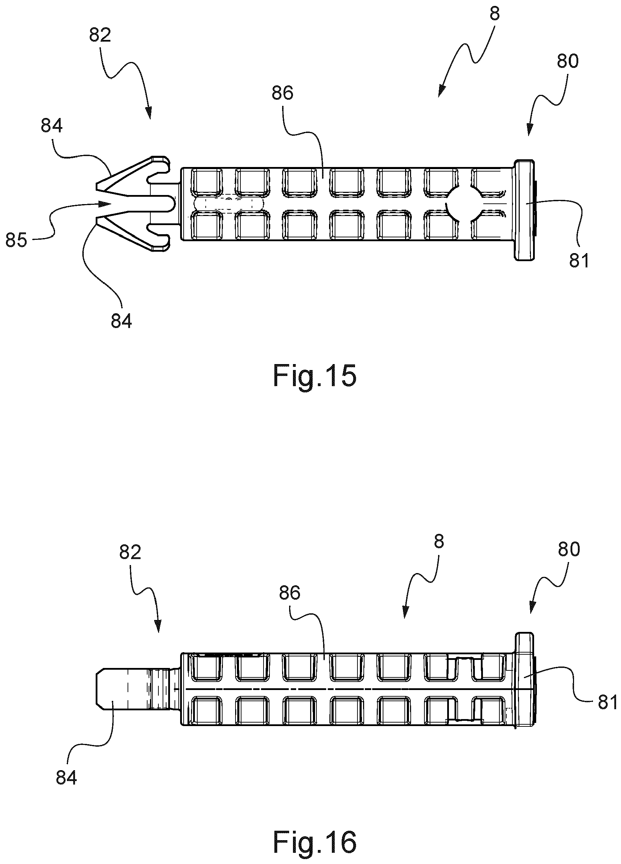

Les figures 15 et 16 montrent plus en détail l'axe de montage 8 du compas 5, prévu pour son assujettissement avec le dispositif d'articulation 4.

L'axe de montage 8 présente ici un corps 86 globalement cylindrique avec, à une première extrémité 80, une collerette 81 de butée et, à une deuxième extrémité 82 opposée à la première extrémité 80, un organe d'encliquetage 83 en forme de deux demi-crochets 84, ou en forme de flèche pourvue d'une fente centrale 85.

L'organe d'encliquetage 83 est sensiblement élastique pour permettre aux demi-crochets 84 de se resserrer au montage puis de s'écarter une fois l'axe de montage 8 en place pour son maintien sûr en position.

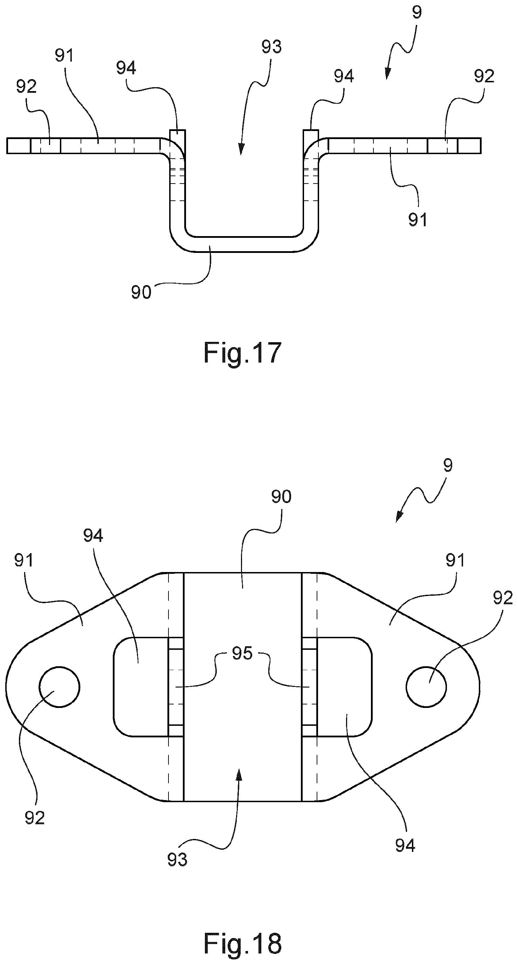

Les figures 17 et 18 montrent plus en détail la pièce d'accrochage 9 du mécanisme 1.

La pièce d'accrochage 9 présente ici une forme d'oméga inversé.

En particulier, la pièce d'accrochage 9 présente une paroi en U 90 de laquelle saillent de part et d'autre du U des branches d'extrémités 91 qui sont ici globalement plates et triangulaires, avec la pointe du triangle à distance du U, et dans chacune desquelles est ménagé un trou 92 pour l'accrochage d'un câble de renfort 10.

La paroi en U 90 défini un logement 93 prévu pour recevoir partiellement l'arceau 2, la deuxième portion de montage sensiblement en forme de U inversé 31 du corps de chariot 3 et le corps central 15 du dispositif d'articulation 4, pour leur assujettissement mécanique ensemble.

La pièce d'accrochage 9 présente ici en outre des fenêtres 94 formées dans les branches d'extrémités 91 à la jonction avec la paroi en U 90, et des portions découpées 94 délimitant les fenêtres 94 du côté de la paroi en U 90.

Les figures 19 à 24 montrent l'assemblage du mécanisme 1 d'articulation de la structure de recouvrement.

En particulier, les figures 19 et 20 montrent l'assemblage du dispositif d'articulation 4 avec le corps de chariot 3.

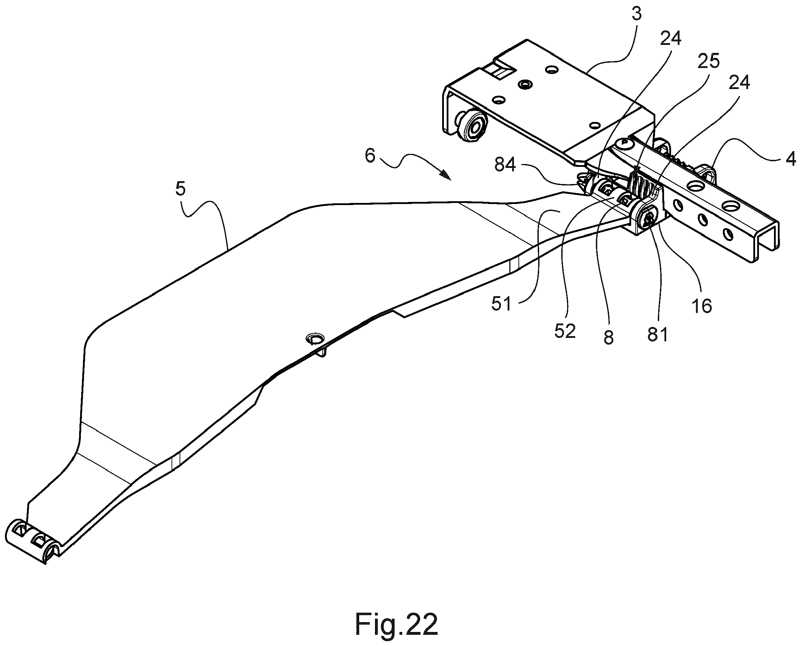

Le corps central 15 du dispositif d'articulation 4 est partiellement reçu dans la deuxième portion de montage sensiblement en forme de U inversé 31 du corps de chariot 3, avec les deux branches latérales 35 qui sont logées dans les dégagements longitudinaux 23, et les des parois bombées 38 qui viennent dans les dégagements latéraux 22, laissant ainsi libre d'accès l'espace d'accueil 25 formé dans chaque extension latérale 16, pour la fixation des compas 5 (voir figure 22).

Le premier organe de montage 13 est ainsi configuré pour être inséré au travers du quatrième trou de fixation 43 du corps de chariot 3 et du premier orifice de fixation 19 du dispositif d'articulation 4 pour leur assujettissement mécanique.

La protubérance 17 du dispositif d'articulation 4 s'étend ainsi en saillie sous la grande branche du L 32 de la première portion de coulissement sensiblement en forme de L 30 du corps de chariot 3.

Il est à noter que sur les figures 19 et 20, un premier galet 60 est monté mobile en rotation sous la grande branche du L 32 au niveau d'un premier trou de fixation 39 de la première portion de coulissement sensiblement en forme de L 30 du corps de chariot 3, par un organe de fixation 62, par exemple du type rivet, et que deux deuxièmes galets 61 sont montés mobiles en rotation au niveau d'autres premiers trous de fixation 39, à l'opposé de la zone emboutie 44, sur la petite branche du L 33 de la première portion de coulissement sensiblement en forme de L 30 du corps de chariot 3, par d'autres organes de fixation similaires.

La figure 21 montre l'assemblage du dispositif d'articulation 4 ensemble avec le corps de chariot 3 et avec le rail de guidage 12.

Le rail de guidage 12 est ici pourvu notamment d'un profilé supérieur 70 formant un premier logement de guidage 71 situé en regard de la grande branche du L 32 de la première portion de coulissement sensiblement en forme de L 30 du corps de chariot 3, et recevant le premier galet 60, et d'un profilé externe 72 formant un deuxième logement de guidage 73 situé en regard de la petite branche du L 33 de la première portion de coulissement sensiblement en forme de L 30 du corps de chariot 3, et recevant les deuxièmes galets 61.

Le rail de guidage 12 est ici pourvu en outre d'un profilé interne 74 situé en regard du dispositif d'articulation 4 et présentant un bord anti basculement 75 s'étendant en saillie vers le corps central 15 et au-dessus de la protubérance 17 du dispositif d'articulation 4.

La figure 22 montre l'assemblage du dispositif d'articulation 4 ensemble avec le corps de chariot 3 et avec le compas 5, sans le rail de guidage 12 (pour simplifier le dessin).

La patte de montage 52 ménagée en saillie de la portion d'extrémité amincie 51 au niveau de l'extrémité 6 du compas 5 est reçue dans l'espace d'accueil 25 ménagé entre les parois transversales 24 des extensions latérales 16 du dispositif d'articulation 4, et l'axe de montage 8 est introduit au travers des orifices traversant des parois transversales 24 et du trou traversant de la patte de montage 52, avec la collerette 81 qui vient en butée contre une des parois transversales 24 et les deux demi-crochets 84 de l'organe d'encliquetage qui sont encliquetés dans l'autre des parois transversales 24, maintenant ainsi le compas 5 avec le dispositif d'articulation 4, tout en laissant la patte de montage 52 libre de tourner autour de l'extension latérale 16.

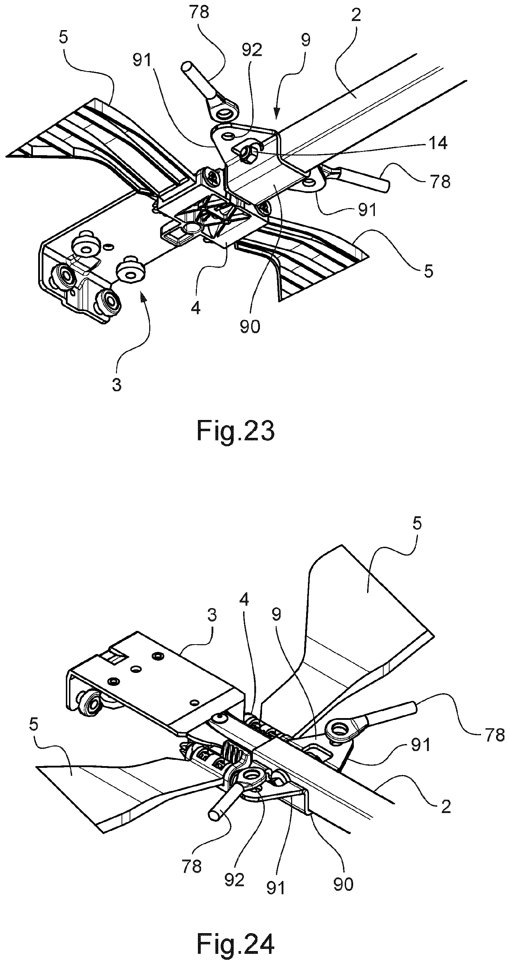

Les figures 23 et 24 montrent l'assemblage du dispositif d'articulation 4 ensemble avec le corps de chariot 3 et deux compas 5, montés comme décrit ci-dessus, avec un arceau 2 du mécanisme 1, et avec des pièces d'extrémité 78 des câbles de renfort 10 configurées pour être fixées sur la pièce d'accrochage 9.

En particulier, l'arceau 2 est emboîté sur le corps principal du dispositif d'articulation 4 et sur la deuxième portion de montage sensiblement en forme de U inversé 31 du corps de chariot 3, avec ces éléments qui sont reçus partiellement dans le logement formé par la paroi en U 90 de la pièce d'accrochage 9, et l'ensemble qui est assujetti par le biais du deuxième organe de montage 14.

Les pièces d'extrémité 78 sont situées en regard des branches d'extrémité 91 de la pièce d'accrochage 9, avec les trous 92 respectifs qui sont situés en regard d'oeillets des pièces d'extrémité 78 respectives, pour l'accrochage des câbles de renfort 10 par le biais d'organes de fixation (non représentés), et avec les pièces d'extrémité 78 qui sont mobiles en rotation par rapport aux branches d'extrémité 91 de la pièce d'accrochage 9.

Le mécanisme 1 décrit ci-dessus est particulièrement commode en ce qu'il est possible de dissocier notamment le corps de chariot 3 et le dispositif d'articulation 4 tout en assurant une rigidité et une reprise d'effort suffisante, d'une part entre le véhicule et l'arceau 2 via le corps de chariot 3 et au moins le corps central du dispositif d'articulation 4, et d'autre part entre le compas 5 et le véhicule via les extensions latérales du dispositif d'articulation 4 et au moins la première portion de coulissement sensiblement en forme de L du corps de chariot 3, et tout en restant compact.

Des variantes non illustrées sont décrites ci-dessous.

Le corps de chariot peut être en plastique, le dispositif d'articulation peut être en métal, le compas peut être en composite, l'arceau peut être en plastique, et la pièce d'accrochage peut être en plastique.

Le corps de chariot peut comporter plus ou moins de galets, disposés par exemple différemment.

Le compas peut présenter une forme différente de celle décrit ci-dessus, par exemple globalement rectangulaire, sans portions amincies et/ou élargies.

Le mécanisme peut être dépourvu de pièce d'accrochage de câbles.

Le rail de guidage peut présenter des profilés différents de ceux décrits ci-dessus.

La structure de recouvrement peut être différente d'une bâche, par exemple une structure à panneaux semi-rigides.

Il peut s'agit d'un véhicule différent d'une remorque de camion, par exemple une remorque agricole, ou bien une caravane ou une caisse pour véhicule du type pick-up.

On rappelle plus généralement que l'invention ne se limite pas aux exemples décrits et représentés.

## Revendications

1. Mécanisme configuré pour articuler une structure de recouvrement pour véhicule, **caractérisé en ce qu'**il comporte au moins un arceau (2) configuré pour supporter la structure de recouvrement du véhicule, au moins un corps de chariot (3) configuré pour être monté coulissant sur le véhicule, au moins un dispositif d'articulation (4) distinct du corps de chariot et configuré pour être assujetti mécaniquement à ce dernier, et au moins un compas (5) pliable et configuré pour être assujetti mécaniquement par une extrémité (6, 7) au dispositif d'articulation et pour supporter aussi la structure de recouvrement du véhicule, **caractérisé en ce que** l'au moins un arceau est configuré en outre pour être assujetti mécaniquement à la fois au corps de chariot et au dispositif d'articulation, avec le corps de chariot qui présente une première portion de coulissement sensiblement en forme de L (30) et une deuxième portion de montage sensiblement en forme de U inversé (31) qui s'étend en saillie de la première portion en forme de L, et avec le dispositif d'articulation qui présente un corps central (15) prévu pour être au moins partiellement reçu dans la deuxième portion de montage sensiblement en forme de U inversé du corps de chariot, pour la fixation de l'au moins un arceau, et des extensions latérales (16) ménagées en saillie de part et d'autre du corps central pour la fixation de l'au moins un compas.

2. Mécanisme selon la revendication 1, **caractérisé en ce que** l'au moins un corps de chariot (3) présente une portion de jonction (36) entre la première portion de coulissement sensiblement en forme de L (30) et la deuxième portion de montage sensiblement en forme de U inversé (31), avec la portion de jonction qui est pourvue de zones latérales (37) ménagées en renfoncement, et l'au moins un dispositif d'articulation (4) qui est pourvu de dégagements latéraux (22) dans les extensions latérales (16) pour la réception des zones latérales ménagées en renfoncement de l'au moins un corps de chariot.

3. Mécanisme selon l'une des revendications 1 et 2, **caractérisé en ce que** les zones latérales (37) ménagées en renfoncement de l'au moins un corps de chariot (3) sont formées par des parois bombées (38) du côté de la deuxième portion de montage sensiblement en forme de U inversé (31).

4. Mécanisme l'une quelconque des revendications 1 à 3, **caractérisé en ce que** l'au moins un dispositif d'articulation (4) est pourvu de dégagements longitudinaux (23) ménagés entre le corps central (15) et les extensions latérales (16), pour le passage de la deuxième portion de montage sensiblement en forme de U inversé (31) du corps de chariot (3).

5. Mécanisme selon l'une quelconque des revendications 1 à 4, **caractérisé en ce que** l'au moins un dispositif d'articulation (4) est pourvu d'une protubérance (17) ménagée en saillie dans une direction d'extension du corps central (15).

6. Mécanisme selon l'une quelconque des revendications 1 à 5, **caractérisé en ce qu'**il comporte en outre au moins un axe de montage (8) pour l'assujettissement de l'au moins un compas (5) avec l'au moins un dispositif d'articulation (4), l'au moins un compas comportant au moins une patte de montage (52) pourvue d'un trou traversant (53), et les extensions latérales (16) de l'au moins un dispositif d'articulation présentant chacune deux parois transversales (24) ménagées à distance l'une de l'autre de sorte à définir un espace d'accueil (25) entre elles pour la réception de la patte de montage ménagée à l'extrémité (6, 7) de l'au moins un compas, et pourvues chacune d'un orifice traversant (26) pour l'insertion de l'axe de montage au travers à la fois des orifices traversant des parois transversales des extensions latérales de l'au moins un dispositif d'articulation et de la patte de montage de l'au moins un compas.

7. Mécanisme selon l'une quelconque des revendications 1 à 6, **caractérisé en ce que** l'au moins un compas (5) présente une portion centrale élargie (50) et des portions d'extrémités amincies (51) s'étendant de part et d'autre de la portion centrale élargie, avec une zone de pli (54) située dans la portion centrale élargie et s'étendant transversalement à une direction générale longitudinale d'extension de l'au moins un compas.

8. Mécanisme selon la revendication 7, **caractérisé en ce que** des nervures de rigidification (55) sont en outre ménagées longitudinalement depuis les portions d'extrémités amincies (51) jusqu'à la portion centrale élargie (50) de l'au moins un compas (5).

9. Mécanisme selon l'une quelconque des revendications 1 à 8, **caractérisé en ce qu'**il comporte en outre au moins une pièce d'accrochage de câbles (9) en forme d'oméga inversé et configurée pour être assujettie mécaniquement à la fois avec l'au moins un arceau (2), la deuxième portion de montage sensiblement en forme de U inversé (31) de l'au moins un corps de chariot (3) et le corps central (15) de l'au moins un dispositif d'articulation (4).

10. Mécanisme selon la revendication 9, **caractérisé en ce que** l'au moins une pièce d'accrochage de câbles (9) est pourvue de branches d'extrémités globalement plates et triangulaires et dans chacune desquelles est ménagé au moins un trou pour l'accrochage d'au moins un câble de renfort (10).

11. Mécanisme selon l'une quelconque des revendications 1 à 10, **caractérisé en ce que** l'au moins un arceau (2) et l'au moins un corps de chariot (3) sont réalisés en métal, et l'au moins un dispositif d'articulation (4) et l'au moins un compas sont réalisés en plastique (5).

12. Véhicule, notamment du type remorque pour camion, comportant une structure de recouvrement et un mécanisme (1) selon l'une quelconque des revendications 1 à 11, qui est configuré pour articuler la structure de recouvrement.

13. Véhicule selon la revendication 12, **caractérisé en ce qu'**il comporte un support définissant une ouverture d'accès, au moins un rail de guidage (12) assujetti mécaniquement et solidairement sur le support, avec le mécanisme (1) qui est assujetti mécaniquement à coulissement sur l'au moins un rail de guidage pour passer la structure de recouvrement de l'une à l'autre d'une configuration dépliée dans laquelle elle ferme totalement ou quasiment totalement l'ouverture d'accès, et d'une configuration repliée ou partiellement repliée dans laquelle elle autorise l'accès complètement ou partiellement à l'ouverture d'accès.

14. Véhicule selon la revendication 13, **caractérisé en ce que** l'au moins un rail de guidage (12) est pourvu d'un profilé supérieur (70) formant un premier logement (71) de guidage pour la réception d'au moins un premier galet (60) monté mobile en rotation dans la première portion de coulissement sensiblement en forme de L (30) du corps de chariot (3), du côté d'une grande branche du L (32), et d'un profilé externe (72) formant un deuxième logement de guidage (73) pour la réception d'au moins un deuxième galet (61) monté mobile en rotation dans la première portion de coulissement sensiblement en forme de L du corps de chariot, du côté d'une petite branche du L (33).

15. Véhicule selon l'une des revendications 13 et 14, **caractérisé en ce que** la structure de recouvrement est formée par une bâche.
